(19) Europäisches Patentamt
European Patent Office
Office européen des brevets

(11) **EP 1 764 454 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **06018059.3**

(22) Anmeldetag: **30.08.2006**

(51) Int Cl.:
*H02S 20/23* <sup>(2014.01)</sup>    *F24S 25/70* <sup>(2018.01)</sup>
*F24S 25/613* <sup>(2018.01)</sup>    *F24S 80/00* <sup>(2018.01)</sup>

(54) **Dachhaken zur Montage von Solaranlagenmodulen auf Dächern**

Hook for mounting modules of a solar installation to a roof

Crochet pour monter des modules d'une installation solaire sour les toits

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.09.2005 DE 102005043957**
**20.12.2005 DE 202005019814 U**

(43) Veröffentlichungstag der Anmeldung:
**21.03.2007 Patentblatt 2007/12**

(73) Patentinhaber: **Kieselbach Maschinenbauteile GmbH**
**59494 Soest (DE)**

(72) Erfinder: **Esken, Manfred**
**59494 Soest (DE)**

(74) Vertreter: **Schweiger, Johannes et al**
**Becker & Müller, Berkenbrink**
**Patentanwälte**
**Turmstrasse 22**
**40878 Ratingen (DE)**

(56) Entgegenhaltungen:
**DE-A1- 19 529 351    DE-C2- 10 132 557**
**DE-U1- 8 406 231    DE-U1- 29 707 800**

EP 1 764 454 B1

**Beschreibung**

Die Erfindung betrifft einen Dachhaken zur Montage von Solaranlagenmodulen auf Dächern, mit einem sich in X- und Y-Richtung erstreckenden Befestigungsabschnitt zur Festlegung des Dachhakens am Dach und mit einem hakenförmigen Halteabschnitt zur Festlegung eines Solaranlagenmoduls oder eines Befestigungsprofils für Solaranlagenmodule.

Die aus der täglichen Praxis bekannten Dachhaken, wie aus dem Dokument DE 84 06 231 U1 bekannt, weisen in ihrem Befestigungsabschnitt mehrere Bohrungen zur Aufnahme von Befestigungsschrauben auf. Mittels der Befestigungsschrauben wird der Dachhaken am Dach, insbesondere an unter den Dachpfannen liegenden Dachlatten, befestigt. Der hakenförmige Halteabschnitt ragt unter den Dachpfannen auf der Dachoberseite hervor. An dem Halteabschnitt werden, in der Regel mit Befestigungsschrauben, die Solaranlagenmodule direkt oder indirekt über Befestigungsprofile befestigt. Die bekannten Dachhaken bestehen in der Regel aus Stahl, insbesondere aus Edelstahl. Die bekannten Dachhaken werden in der Regel aus zwei Teilstücken, nämlich dem Befestigungsabschnitt und dem Halteabschnitt zusammengeschweißt. Nachteilig bei den bekannten Dachhaken ist einerseits das hohe Gewicht und andererseits die Verletzungsgefahr durch scharfe Kanten, insbesondere im Bereich der Schweißnähte und/oder Schnittkanten.

Der Erfindung liegt die Aufgabe zugrunde, einen verbesserten Dachhaken vorzuschlagen, der trotz eines reduzierten Gewichtes extrem belastbar ist.

Diese Aufgabe wird mit den Merkmalen des Anspruchs 1 gelöst.

Vorteilhafte Ausgestaltungen der Erfindung sind in den Unteransprüchen angegeben.

Erfindungsgemäß ist vorgesehen, den Dachhaken einstückig aus Aluminiumguss herzustellen. Als Herstellungsverfahren eignen sich insbesondere bekannte Aluminiumgussverfahren. Im Gegensatz zu den bekannten Dachhaken kommt der erfindungsgemäße Dachhaken aus Aluminiumguss ohne Schweißnähte aus. Aufgrund der Materialwahl können bis zu 50 % Gewicht eingespart werden, was die Montage hoch oben auf Dächern wesentlich erleichtert. Es hat sich gezeigt, dass der erfindungsgemäße Dachhaken aus Aluminiumguss äußerst witterungsbeständig ist. Ein weiterer wesentlicher Vorteil besteht darin, dass chemische Reaktionen mit anderen Aluminiumbauteilen, insbesondere Aluminiumbauteilen der Solaranlage oder des Befestigungsprofils für Solaranlagenmodule, mit Vorteil vermieden werden. Da keine Schweißarbeiten mehr notwendig sind, werden die Kosten für die Fertigung erheblich reduziert. Ebenso kann die Fertigungszeit minimiert werden. Ein wesentlicher Vorteil der Erfindung ist in der ansprechenderen Optik zu sehen. Aufgrund der Verzichts auf Schweißnähte wird die Verletzungsgefahr bei der Handhabung der erfindungsgemäßen Dachhaken wesentlich reduziert.

In Ausgestaltung der Erfindung ist mit Vorteil vorgesehen, dass der Halteabschnitt für die Solaranlagenmodule einen Übergangsschenkel aufweist, der in etwa senkrecht zum Halteabschnitt angeordnet ist. Anders ausgedrückt ragt der Übergangsschenkel aus der Ebene des Befestigungsabschnitts in Z-Richtung heraus. An den Übergangsschenkel schließt ein U-förmiger Hakenabschnitt an. Dieser Hakenabschnitt besteht aus einem parallel zur Ebene des Befestigungsabschnitts verlaufenden Stützschenkel, an den ein sich in etwa in Z-Richtung erstreckender Bodenschenkel anschließt. Der Bodenschenkel verläuft in etwa parallel zu dem Übergangsschenkel. Der Bodenschenkel wiederum mündet in einen parallel zur Ebene des Befestigungsabschnitts verlaufenden Fixierschenkel. Die Solaranlagenmodule, bzw. deren Befestigungsprofile, werden in den U-förmigen Hakenabschnitt aufgenommen und an dem Fixierschenkel gesichert, der entweder einstückig mit dem Hakenabschnitt ausgebildet ist oder über ein Langloch an dem Bodenschenkel in etwa in Z-Richtung verschieblich an dem Hakenabschnitt angebracht ist. Die recht komplexe Form des Dachhakens lässt sich optimal aus Aluminiumguss herstellen. Auf teure Nacharbeiten kann aufgrund der Erfindung mit Vorteil verzichtet werden.

Damit die Solaranlagen bzw. die Befestigungsprofile für die Solaranlagen besonders einfach an dem Fixierschenkel festgelegt werden können, ist in Ausgestaltung der Erfindung in dem Fixierschenkel ein sich in Y-Richtung erstreckendes Langloch vorgesehen. In dem Langloch kann eine Befestigungsschraube zur Fixierung des Solaranlagenmoduls bzw. des Befestigungsprofils aufgenommen werden. Durch die Ausgestaltung des Loches als Langloch können Toleranzen auf einfache Weise ausgeglichen werden. Dies gilt auch analog für die optionale Befestigung des Fixierschenkels durch das im vorigen Absatz beschriebene Langloch.

Ein besonders belastbarer Dachhaken wird dadurch erhalten, dass mindestens eine Verstärkungsrippe vorgesehen ist. Insbesondere sind die Verstärkungsrippen im Bereich des Befestigungsabschnitts angeordnet und erstrecken sich in Z-Richtung aus der Ebene des Befestigungsabschnitts heraus.

In Ausgestaltung der Erfindung ist vorgesehen, dass sich mindestens eine Verstärkungsrippe, vorzugsweise zwei Verstärkungsrippen, von dem Befestigungsabschnitt bis zum Halteabschnitt erstreckt. Hierdurch wird der Übergang zwischen dem Befestigungsabschnitt und dem Halteabschnitt gestärkt. Aufgrund der stabilen Ausgestaltung des Dachhakens werden die Dachziegel entlastet und ein Bruch derselben vermieden. Es ist von besonderem Vorteil, wenn sich die Verstärkungsrippen über mindestens eine Teillänge, vorzugsweise über die gesamte Länge, des Übergangsschenkels des Halteabschnitts erstrecken.

Der Übergangsbereich von dem Befestigungsabschnitt zu dem Halteabschnitt kann weiter dadurch stabilisiert werden, dass die Höhe und/oder die Breite der sich von dem Befestigungsabschnitt bis zum Halteabschnitt erstreckenden Verstärkungsrippen vom Befestigungsabschnitt bis zum Halteabschnitt zunimmt.

Gemäß einer zweckmäßigen Weiterbildung der Erfindung ist vorgesehen, dass die sich von dem Befestigungsabschnitt bis zum Halteabschnitt erstreckenden Verstärkungsrippen schräg verlaufen. Es hat sich herausgestellt, dass ein besonders stabiler Dachhaken erhalten wird, wenn die Verstärkungsrippen unter einem Winkel $\alpha < 90°$, vorzugsweise 30°< $\alpha$ <70°, insbesondere $\alpha$ = 50°, zur X-Richtung verlaufen. Hierdurch wird die von dem Halteabschnitt in den Befestigungsabschnitt eingeleitete Belastung auf einen Großteil der Fläche des Befestigungsabschnitts verteilt.

Zusätzlich ist es von Vorteil, wenn mindestens eine, vorzugsweise drei Verstärkungsrippen in Querrichtung (X-Richtung) des Befestigungsabschnitts verlaufen. Insbesondere durch eine Kombination der in Querrichtung verlaufenden Verstärkungsrippen und der schräg hierzu verlaufenden Verstärkungsrippen wird ein äußerst stabiler Dachhaken erhalten.

In Weiterbildung der Erfindung ist vorgesehen, dass die Kanten des Befestigungsabschnitts und/oder des Halteabschnitts zumindest teilweise abgerundet sind. Insbesondere ist es wichtig, die in der Einbaulage vom Dach weg weisenden Kanten abzurunden. Von besonderem Vorteil ist es, auch die Kanten der Verstärkungsrippen gerundet auszubilden. Dieser Forderung kann durch die Herstellung im Gussverfahren Rechnung getragen werden.

Eine Entlastung der Dachziegel wird dadurch erreicht, dass ein Winkel β zwischen dem Bodenschenkel und dem hinteren Stützschenkel nicht genau 90°, sondern etwa 95°, insbesondere 95,34°, beträgt.

In Weiterbildung der Erfindung ist vorgesehen, dass an dem Bodenschenkel über ein Langloch ein in etwa in Y-Richtung verlaufender Fixierschenkel angebracht ist. Das Langloch ist in den Bodenschenkel eingebracht. Der Fixierschenkel stabilisiert das zu montierende Solaranlagenmodul bzw. das Befestigungsprofil für das Solaranlagenmodul in Z-Richtung. Über das Langloch kann die Länge das Bodenschenkels und damit der Abstand zwischen dem Fixierschenkel und Stützschenkel variiert werden, wodurch der Halteabschnitt an die Breite des Solaranlagenmoduls bzw. des Befestigungsprofil angepasst werden kann.

Mit Vorteil ist vorgesehen, dass an dem Fixierschenkel in Z-Richtung ein Montageschenkel mit mindestens einer Montageöffnung anschließt. Dabei kann der Fixierschenkel entweder einstückig mit dem Bodenschenkel ausgebildet sein oder über ein Langloch an diesem befestigt sein. Bei einer derartigen Ausführungsform wird in der Regel innerhalb des Hakenabschnitts nur eine Dachpfanne aufgenommen - oder anders ausgedrückt dienen Bodenschenkel und Fixierschenkel lediglich dazu, den Dachhaken unter den Dachpfannen nach außen zu führen. Die eigentliche Montage des Solaranlagenmoduls erfolgt an dem Montageschenkel, der in etwa in einem 90°-Winkel an den Fixierschenkel anschließt und sich somit in Z-Richtung in einer Parallelebene zum Bodenschenkel erstreckt.

Ein besonders stabiler Dachhaken wird erhalten, wenn der Fixierschenkel einstückig mit dem Montageschenkel ausgebildet ist.

Die Stabilität wird noch weiter erhöht, wenn die Höhenerstreckung des Montageschenkels in Y-Richtung größer ist als seine Breitenerstreckung in X-Richtung. Hierdurch kann der Montageschenkel in Y-Richtung und in Z-Richtung wesentlich höhere Kräfte aufnehmen. Ein noch stabilerer Dachhaken wird erhalten, wenn zusätzlich die Tiefenerstreckung des Fixierschenkels in Z-Richtung größer ist als seine Breitenerstreckung in X-Richtung. Die größten Kräfte in Y-Richtung können aufgenommen werden, wenn zusätzlich noch die Höhenerstreckung des Bodenschenkels in Y-Richtung größer ist als seine Breitenerstreckung in X-Richtung. Ein Durchbiegen in Y-Richtung wird somit quasi ausgeschlossen.

Bevorzugt sind drei als Rundlöcher ausgebildete Montagelöcher in den Montageschenkel eingebracht. Durch diese Montagelöcher können Befestigungsschrauben zur Fixierung des Solaranlagenmoduls bzw. des Befestigungsprofils geführt werden. Zusätzlich oder alternativ kann als Montageloch ein Langloch vorgesehen werden.

Im Folgenden wird die Erfindung anhand eines in der Zeichnung gezeigten Ausführungsbeispiels näher erläutert. Es zeigen:

Fig. 1 eine perspektivische Ansicht eines Dachhakens von schräg vorne,

Fig. 2 eine perspektivische Ansicht des Dachhakens gemäß Fig. 1 von schräg hinten,

Fig. 3 eine Teilansicht des Dachhakens mit verstellbarem Fixierschenke,

Fig. 4 - 7 verschiedene perspektivische Ansichten eines alternativen Dachhakens und

Fig. 8 - 11 verschiedene perspektivische Ansichten einer weiteren alternativen Ausgestaltung des erfindungsgemäßen Dachhakens.

Fig. 12 - 15 verschiedene perspektivische Ansichten einer weiteren alternativen Ausgestaltung des erfindungsgemäßen Dachhakens.

In den Figuren sind gleiche Bauteile und Bauteile mit den gleichen Bezugszeichen gekennzeichnet.

In den Figuren ist ein Dachhaken 1 gezeigt. Zur Vereinfachung der Beschreibung der Lage der einzelnen Bestandteile des Dachhakens 1 zueinander, ist in den Figuren ein dreidimensionales Koordinatensystem mit drei im 90°-Winkel zueinander verlaufenden Achsen X, Y und Z eingeführt.

Der erfindungsgemäße Dachhaken 1 weist einen sich in X- und Y-Richtung erstreckenden, in der Draufsicht rechteckigen, Befestigungsabschnitt 2 auf. Der Befestigungsabschnitt ist mit zwei parallelen, in X-Richtung verlaufenden Reihen von Befestigungsbohrungen 3 versehen. Diese dienen zur Aufnahme von nicht dargestellten Befestigungsschrauben zur Fixierung des Dachhakens 1 mit seinem Befestigungsabschnitt 2 am Dach.

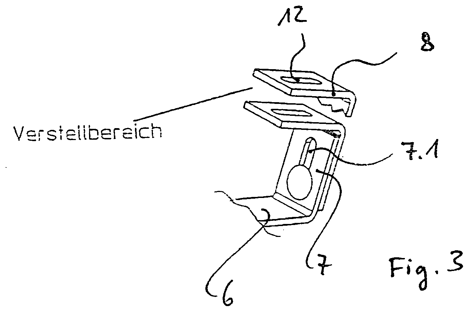

Neben dem Befestigungsabschnitt 2 weist der Dachhaken 1 einen Halteabschnitt 4 auf. Der Halteabschnitt 4 besteht aus einem sich von dem Befestigungsabschnitt 2 in etwa in Z-Richtung erstreckenden Übergangsschenkel 5. Der Übergangsschenkel 5 mündet in einen in Y-Richtung und in der Zeichnungsebene nach unten verlaufenden Stützschenkel 6. Der Stützschenkel 6 wiederum endet in einem in Z-Richtung verlaufenden Bodenschenkel 7, welcher wiederum in einen in der Zeichnungsebene nach oben verlaufenden, parallel zum Stützschenkel 6 angeordneten, Fixierschenkel 8 mündet, wobei der Fixierschenkel 8 auch über ein im Bodenschenkel vorgesehenes Langloch 7.1 verschiebbar befestigt angebracht sein kann (siehe Fig. 3). Der Winkel β zwischen dem Bodenschenkel 7 und dem Stützschenkel 4 beträgt in dem gezeigten Ausführungsbeispiel 95,34°. Durch die einteilige Ausbildung des Dachhakens 1 aus Aluminiumguss ist es möglich, die Übergänge 9, 10, 11 zwischen dem Übergangsschenkel 5 und dem Stützschenkel 6, dem Stützschenkel 6 und dem Bodenschenkel 7 sowie dem Bodenschenkel 7 und dem Fixierschenkel 8 gebogen auszubilden.

Der Fixierschenkel 8 weist ein sich in Y-Richtung erstreckendes Langloch 12 zur Aufnahme von nicht dargestellten Fixierschrauben zur Festlegung eines Solaranlagenmoduls oder eines Befestigungsprofils für Solaranlagenmodule auf.

Zur Erhöhung der Stabilität des Dachhakens sind drei parallele, in X-Richtung verlaufende, Verstärkungsrippen 13, 14, 15 am Befestigungsabschnitt 2 vorgesehen. Sämtliche Verstärkungsrippen 13, 14, 15 erstrecken sich von dem Befestigungsabschnitt 2 in Z-Richtung. Die untere Verstärkungsrippe 15 schmiegt sich zu beiden Seiten an den Übergangsschenkel 5 an. Die Unterseite 16 des Befestigungsabschnitts 2 ist zur verbesserten Anlage an einer nicht gezeigten Dachlatte eben ausgebildet.

Zur weiteren Erhöhung der Stabilität des Dachhakens 1 sind zwei schräg verlaufende Verstärkungsrippen 17, 18 vorgesehen. Die Verstärkungsrippen 17, 18 verlaufen unter einem Winkel α = 50° zur X-Richtung. Die Verstärkungsrippen 17, 18 erstrecken sich von der oberen Verstärkungsrippe 13 des Befestigungsabschnitts 2 bis über die gesamte Länge des Übergangsschenkels 5 des Halteabschnitts 4. Die Ausdehnung der Verstärkungsrippen 17, 18 in Z-Richtung nimmt über deren Verlauf in Richtung Übergangsschenkel zu. Anders ausgedrückt, schmiegen sich die Verstärkungsrippen 17, 18 an den sich in Z-Richtung erstreckenden Übergangsschenkel 5 an. Hierdurch wird eine gleichmäßige Verteilung der auf den Dachhaken 1 wirkenden Last auf eine große Fläche des Befestigungsabschnitts 2 erreicht.

Wie aus den Figuren ersichtlich ist, sind sämtliche Kanten des Dachhakens 1, außer die Eckkanten der Unterseite 16 des rechteckigen Befestigungsabschnitts 2, abgerundet ausgebildet, um die Verletzungsgefahr zu reduzieren sowie um eine ansprechendere Optik zu erzielen.

Bei dem Ausführungsbeispiel gemäß Fig. 3 ist an dem Bodenschenkel 7 über ein Langloch 7.1 ein in etwa in Y-Richtung verlaufender Fixierschenkel 8 angebracht ist. Dieser stabilisiert das zu montierende Solaranlagenmodul bzw. das Befestigungsprofil für das Solaranlagenmodul in Z-Richtung. Über das Langloch 7.1 kann die Länge das Bodenschenkels 7 und damit der Abstand zwischen dem Fixierschenkel 8 und Stützschenkel 6 variiert werden, wodurch der Halteabschnitt 4 an die Breite des Solaranlagenmoduls bzw. des Befestigungsprofil angepasst werden kann.

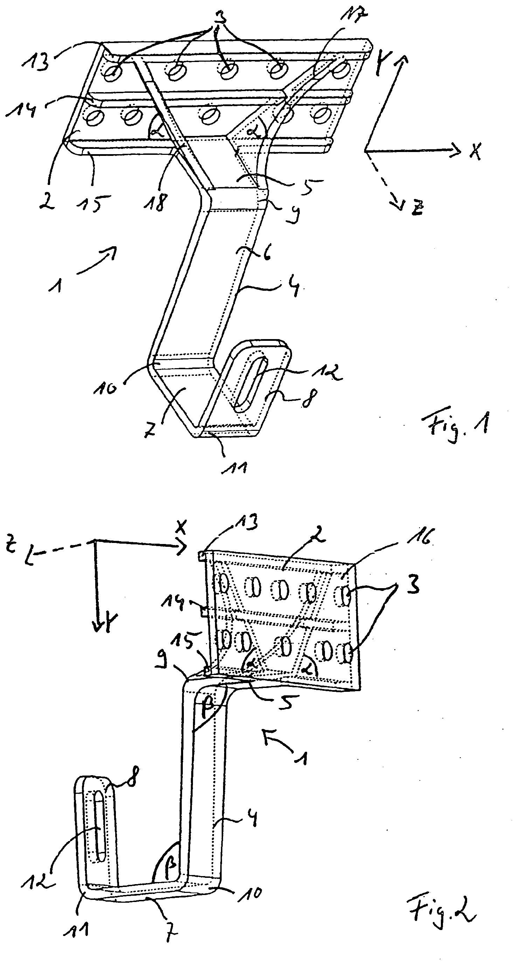

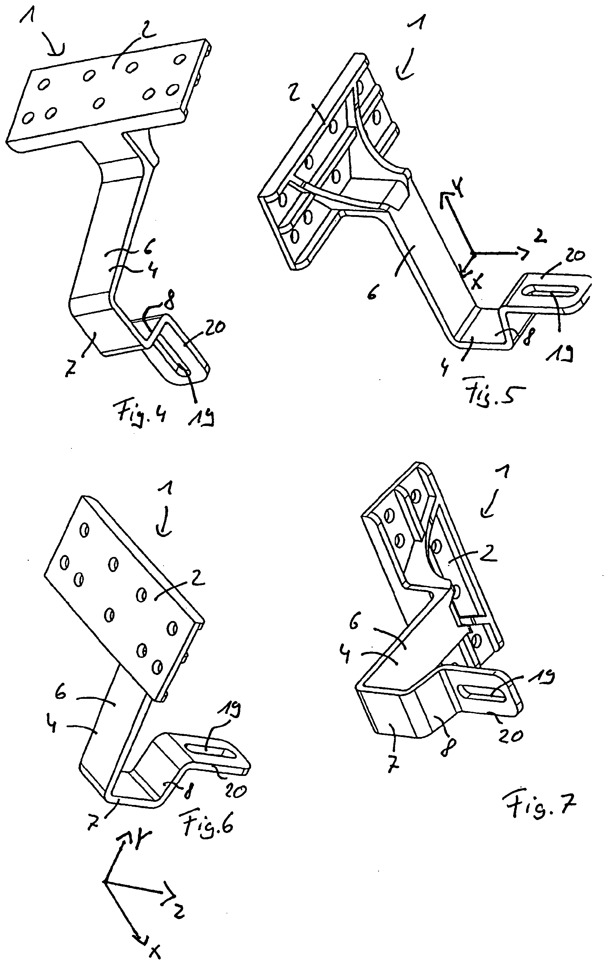

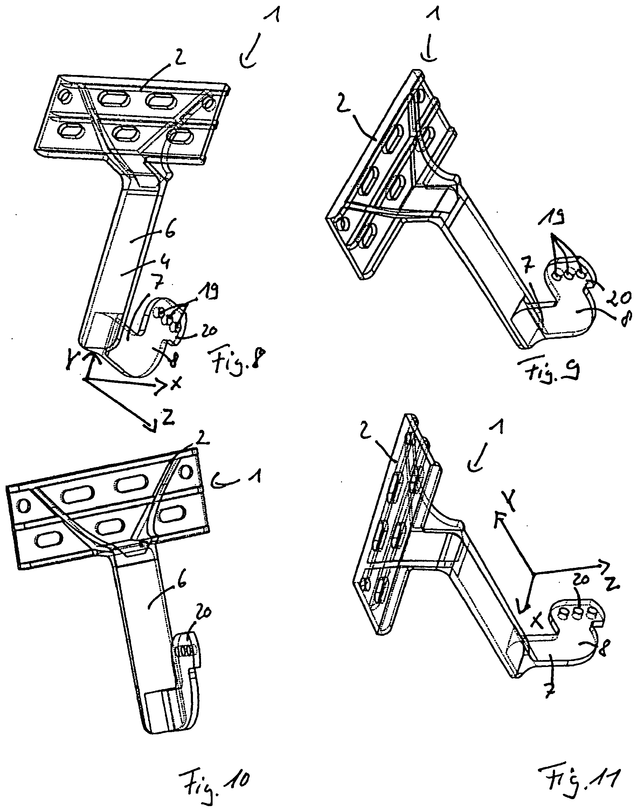

Bei dem Ausführungsbeispiel gemäß den Fig. 4 bis 7 schließt einstückig an den Fixierschenkel 8 ein Montageschenkel 20 in Z-Richtung an. Der Fixierschenkel 8 hat bei diesem Ausführungsbeispiel seine eigentliche Fixierfunktion 8 verloren. Die Fixierung des Solaranlagenmoduls erfolgt an dem Montageschenkel 20 mit einem hierfür vorgesehenen, als Langloch ausgebildeten Montageloch 19, durch dass mindestens eine Befestigungsschraube geführt wird. In dem U-förmigen Hakenabschnitt 4, bestehend aus Stützschenkel 6, Bodenschenkel 7 und Fixierschenkel 8 (hier ohne Langloch) kann eine Dachplatte aufgenommen werden. Über den Bodenschenkel 7 und den Fixierschenkel 8 wird der Dachhaken 1 von unterhalb des Daches herausgeführt. Anstelle des als Langloch ausgeführten Montagelochs 20 können auch Rundlöcher vorgesehenen werden, wie dies beispielsweise in den Fig. 8 bis 12 gezeigt ist. Bis auf die erwähnten Unterschiede entspricht der Dachhaken 1 gemäß den Fig. 4 bis 7 dem Dachhaken gemäß den Fig. 1 und 2. Bezüglich der Gemeinsamkeiten wird auf die diesbezügliche Figurenbeschreibung verwiesen.

In den Fig. 8 bis 11 ist ein weiteres Ausführungsbeispiel gezeigt. Wie bei dem Ausführungsbeispiel gemäß den Fig. 4 bis 7 ist auch bei dem gezeigten Dachhaken 1 ein zusätzlicher Montageschenkel 20 vorgesehen. Die Höhenerstreckung des Montageschenkels 20 in Y-Richtung ist größer als seine Breitenerstreckung in X-Richtung. Hierdurch eignet sich der Dachhaken zur Befestigung an in Richtung Dachschräge verlaufenden Abschnitten des Solaranlagenmoduls bzw. des zugehörigen Befestigungsprofils. Das Solaranlagenmodul bzw. das Befestigungsprofil wird nicht in dem Hakenabschnitt 4 aufgenommen, sondern verläuft seitlich an den Montageschenkel vorbei. Der gezeigte Dachhaken 1 ist besonders stabil in Y-Richtung, da die Tiefenerstreckung des Fixierschenkels in Z-Richtung größer ist als seine Breitenerstreckung in X-Richtung und weil die Höhenerstreckung des Bodenschenkels in Y-Richtung größer ist als seine Breitenerstreckung in X-Richtung. Ein Durchbiegen in Y-Richtung ist somit ausgeschlossen.

Bei dem beschriebenen Ausführungsbeispiel sind die Montagelöcher 19 als drei in Z-Richtung beabstandete und in Y-Richtung durchgehende Rundlöcher ausgebildet.

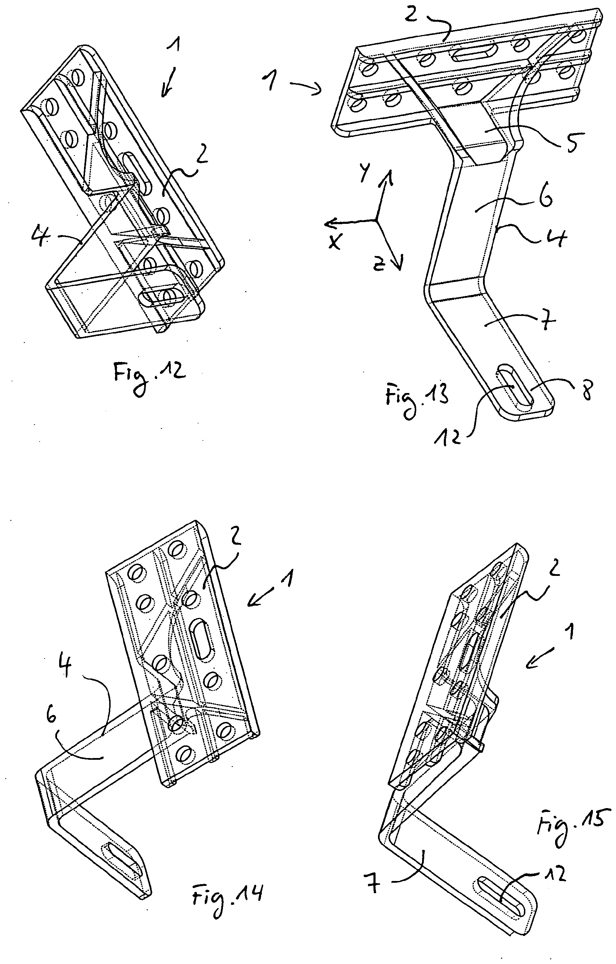

In den Fig. 12 bis 15 ist ein weiteres Ausführungsbeispiel gezeigt. Wie bei dem Ausführungsbeispiel gemäß den Fig. 1 und 2 ist auch bei dem hier gezeigten Dachhaken 1 ein Fixierschenkel 8 vorgesehen. Dieser ist jedoch für eine alternative Befestigungsmöglichkeit nicht abgewinkelt angebracht, sondern erstreckt sich in Verlängerung zu dem Bodenschenkel 7 und weist im Bereich des Fixierschenkels 8 ein Langloch 12 auf.

Bezugszeichenliste

1    Dachhaken
2    Befestigungsabschnitt
3    Befestigungsbohrungen
4    Halteabschnitt
5    Übergangsschenkel
6    Stützschenkel
7    Bodenschenkel
7.1  Langloch
8    Fixierschenkel
9    Übergang
10   Übergang
11   Übergang
12   Langloch
13   Verstärkungsrippe
14   Verstärkungsrippe
15   Verstärkungsrippe
16   Unterseite
17   schräge Verstärkungsrippe
18   schräge Verstärkungsrippe
19   Montageöffnung
20   Montageschenkel

**Patentansprüche**

1.  Dachhaken (1) zur Montage von Solaranlagenmodulen auf Dächern, mit einem sich in X- und Y-Richtung erstreckenden Befestigungsabschnitt (2) zur Festlegung des Dachhakens (1) am Dach und mit einem Halteabschnitt (4) zur Festlegung eines Solaranlagenmoduls oder eines Befestigungsprofils für Solaranlagenmodule, wobei der Dachhaken (1) einstückig ausgebildet ist und der Halteabschnitt (4) einen in etwa senkrecht (in Z-Richtung) zu dem Befestigungsabschnitt (2) verlaufenden Übergangsschenkel (5) aufweist, wobei an den Übergangsschenkel (5) ein hinterer, in etwa in Y-Richtung verlaufender Stützschenkel (6) anschließt, der in einen sich in etwa in Z-Richtung erstreckenden Bodenschenkel (7) mündet, **dadurch gekennzeichnet, dass** der Dachhaken (1) aus Aluminiumguss gebildet ist und

   a) mindestens eine erste Verstärkungsrippe (13, 14, 15) am Dachhaken (1) in Querrichtung des Befestigungsabschnitts (2) verläuft und
   b) mindestens eine zweite Verstärkungsrippe (17, 18) am Dachhaken (1) sich von dem Befestigungsabschnitt (2) bis zum Halteabschnitt (4) über mindestens eine Teillänge des Übergangsschenkels (5) erstreckt und schräg zu der ersten Verstärkungsrippe (13, 14, 15) verläuft.

2.  Dachhaken nach Anspruch 1, **dadurch gekennzeichnet, dass** sich zwei Verstärkungsrippen (17, 18), von dem Befestigungsabschnitt (2) bis zum Halteabschnitt (4) erstrecken,

3.  Dachhaken nach Anspruch 2, **dadurch gekennzeichnet, dass** an dem Bodenschenkel (7) über ein Langloch (7.1) ein in etwa in Y-Richtung verlaufender Fixierschenkel (8) angebracht ist.

4.  Dachhaken nach Anspruch 2, **dadurch gekennzeichnet, dass** an den Bodenschenkel (7) ein in etwa in Y-Richtung verlaufender Fixierschenkel (8) einstückig angrenzt.

5.  Dachhaken nach einem der Ansprüche 3 oder 4, **dadurch gekennzeichnet, dass** der Fixierschenkel (8) ein sich in Y-Richtung erstreckendes Langloch (12) aufweist.

6.  Dachhaken nach Anspruch 5, **dadurch gekennzeichnet, dass** die Höhe und/oder die Breite der sich von dem Befestigungsabschnitt (2) bis zum Halteabschnitt (4) erstreckenden Verstärkungsrippen (17, 18) vom Befestigungsabschnitt (4) bis zum Halteabschnitt (3) zunimmt.

7.  Dachhaken nach einem der Ansprüche 5 oder 6, **dadurch gekennzeichnet, dass** die sich von dem Befestigungsabschnitt (3) bis zum Halteabschnitt (4) erstreckenden Verstärkungsrippen (17, 18) unter einem Winkel $\alpha < 90°$, vorzugsweise $30° < \alpha < 70°$, insbesondere $\alpha = 50°$, zur X-Richtung verlaufen.

8.  Dachhaken nach einem der Ansprüche 4 bis 7, **dadurch gekennzeichnet, dass** mindestens eine, vorzugsweise drei, Übergänge (9, 10, 11) in X-Richtung verlaufen,

9.  Dachhaken nach einem der vorhergehenden Ansprüche, **dadurch gekennzeichnet, dass** zumindest ein Teil der Kanten des Befestigungsabschnitts (2), und/oder des Halteabschnitts (3) abgerundet sind

**10.** Dachhaken nach Anspruch 2,
**dadurch gekennzeichnet, dass** ein Winkel β zwischen dem Bodenschenkel (7) und dem hinteren Stützschenkel (6) etwa 95°, insbesondere 95,34°, beträgt.

## Claims

**1.** A roof hook (1) for mounting solar system modules on roofs, with an attachment section (2), extending in the X and Y direction, for purposes of fixing the roof hook (1) to the roof, and with a holding section (4) for purposes of fixing a solar system module, or an attachment profile for solar system modules, wherein
the roof hook (1) is integrally constructed, and the holding section (4) has a transition leg (5) running approximately at right angles (in the Z-direction) to the attachment section (2), wherein
a rear support leg (6), running approximately in the Y-direction, is connected to the transition leg (5), which support leg leads into a bottom leg (7), extending approximately in the Z-direction,
**characterised in that**,
the roof hook (1) is made of cast aluminium, and

a) at least one first reinforcing rib (13, 14, 15) on the roof hook (1) runs in the transverse direction of the attachment section (2), and
b) at least one second reinforcing rib (17, 18) on the roof hook (1) extends from the attachment section (2) to the holding section (4) over at least part of the length of the transition leg (5), and runs obliquely to the first reinforcing rib (13, 14, 15).

**2.** The roof hook in accordance with claim 1,
**characterised in that**,
two reinforcing ribs (17, 18) extend from the attachment section (2) to the holding section (4).

**3.** The roof hook in accordance with claim 2,
**characterised in that**,
a fixing leg (8) running approximately in the Y-direction is attached to the bottom leg (7) via an elongated hole (7.1).

**4.** The roof hook in accordance with claim 2,
**characterised in that**,
a fixing leg (8) running approximately in the Y-direction integrally adjoins the bottom leg (7).

**5.** The roof hook in accordance with one of the claims 3 or 4,
**characterised in that**,
the fixing leg (8) has an elongated hole (12) extending in the Y-direction.

**6.** The roof hook in accordance with claim 5,
**characterised in that**,
the height and/or width of the reinforcing ribs (17, 18) extending from the attachment section (2) to the holding section (4) increases from the attachment section (4) to the holding section (3).

**7.** The roof hook in accordance with one of the claims 5 or 6,
**characterised in that**,
the reinforcing ribs (17, 18), extending from the attachment section (3) to the holding section (4), extend at an angle $\alpha < 90°$, preferably $30° < \alpha < 70°$; in particular $\alpha = 50°$; to the X-direction.

**8.** The roof hook in accordance with one of the claims 4 to 7,
**characterised in that**,
at least one, preferably three, transitions (9, 10, 11) run in the X-direction.

**9.** The roof hook in accordance with one of the preceding claims,
**characterised in that**,
at least some of the edges of the attachment section (2) and/or the holding section (3) are rounded off.

**10.** The roof hook in accordance with claim 2,
**characterised in that**,
an angle β between the bottom leg (7) and the rear supporting leg (6) is approximately 95°, in particular 95.34°.

## Revendications

**1.** Crochet de toit (1) destiné à monter des modules d'installation photovoltaïque sur des toits, pourvu d'un segment d'ancrage (2) s'étendant dans la direction X et Y, pour immobiliser le crochet de toit (1) sur le toit et d'un segment de maintien (4) pour immobiliser un module d'installation photovoltaïque ou un profilé de fixation pour modules d'installation photovoltaïque, le crochet de toit (1) étant conçu en monobloc et le segment de maintien (4) comportant une branche de transition (5) s'écoulant approximativement à la perpendiculaire (dans la direction Z) du segment d'ancrage (2), sur la branche de transition (5) se raccordant une branche d'appui (6) arrière, s'écoulant approximativement dans la direction Y, qui débouche dans une branche de fond (7), s'étendant approximativement dans la direction Z,
**caractérisé en ce que** le crochet de toit (1) est réalisé en fonte d'aluminium et

a) **en ce qu'**au moins une première nervure de renfort (13, 14, 15) s'écoule sur le crochet de toit (1), dans la direction transversale du segment d'ancrage (2) et

b) **en ce qu'**au moins une deuxième nervure de renfort (17, 18) sur le crochet de toit (1) s'étend du segment d'ancrage (2) jusqu'au segment de maintien (4), sur au moins une longueur partielle de la branche de transition (5) et s'écoule en oblique par rapport à la première nervure de renfort (13, 14, 15).

2. Crochet de toit selon la revendication 1, **caractérisé en ce que** deux nervures de renfort (17, 18) s'étendent du segment d'ancrage (2) jusqu'au segment de maintien (4).

3. Crochet de toit selon la revendication 2, **caractérisé en ce qu'**une branche de fixation (8) s'écoulant approximativement dans la direction Y est montée par l'intermédiaire d'un trou oblong (7.1) sur la branche de fond (7).

4. Crochet de toit selon la revendication 2, **caractérisé en ce qu'**une branche de fixation (8) s'écoulant approximativement dans la direction Y est adjacente en monobloc à la branche de fond (7).

5. Crochet de toit selon l'une quelconque des revendications 3 ou 4, **caractérisé en ce que** la branche de fixation (8) comporte un trou oblong (12) s'étendant dans la direction Y.

6. Crochet de toit selon la revendication 5, **caractérisé en ce que** la hauteur et/ou la largeur des nervures de renfort (17, 18) s'étendant du segment d'ancrage (2) jusqu'au segment de maintien (4) augmente du segment de fixation (4) jusqu'au segment de maintien (3).

7. Crochet de toit selon l'une quelconque des revendications 5 ou 6, **caractérisé en ce que** les nervures de renfort (17, 18) s'étendant du segment d'ancrage (3) jusqu'au segment de maintien (4) s'écoulent dans la direction X sous un angle $\alpha < 90°$, de préférence $30° < \alpha < 70°$, notamment de $\alpha = 50°$.

8. Crochet de toit selon l'une quelconque des revendications 4 à 7, **caractérisé en ce qu'**au moins une, de préférence trois transitions (9, 10, 11) s'écoulent dans la direction X.

9. Crochet de toit selon l'une quelconque des revendications précédentes, **caractérisé en ce qu'**au moins une partie des arêtes du segment d'ancrage (2), et/ou du segment de maintien (3) sont arrondies.

10. Crochet de toit selon la revendication 2, **caractérisé en ce qu'**un angle $\beta$ entre la branche de fond (7) et la branche d'appui (6) arrière s'élève à environ 95°, notamment à 95,34°.

Fig. 1

Fig. 2

Fig. 3

Fig. 4

Fig. 5

Fig. 6

Fig. 7

Fig. 8

Fig. 9

Fig. 10

Fig. 11

1

2

4

Fig. 12

1

2

5

6

4

7

8

12

Y

X

Z

Fig. 13

2

1

4

6

Fig. 14

2

1

7

12

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8406231 U1